# EUROPÄISCHE PATENTSCHRIFT

(11) **EP 1 461 236 B1**
(45) Veröffentlichungstag und Bekanntmachung des Hinweises auf die Patenterteilung: **04.05.2005**
(21) Anmeldenummer: 02791862.2
(22) Anmeldetag: 21.12.2002
(51) Int. Cl.: B62D 5/06, B62D 5/04, B62D 5/30

(54) **LENKSYSTEM FÜR KRAFTFAHRZEUGE**
STEERING SYSTEM FOR MOTOR VEHICLES
SYSTEME DE DIRECTION POUR AUTOMOBILES

(30) Priorität: 03.01.2002 DE 10200097
(43) Veröffentlichungstag der Anmeldung: 29.09.2004
(73) Patentinhaber: ZF Lenksysteme GmbH, 73527 Schwäbisch Gmünd (DE)
(72) Erfinder: KRUTTSCHNITT, Andreas, Heidenheim 89522 (DE); DOSTER, Wilfried, 73550 Waldstetten (DE)
(86) Internationale Anmeldenummer: PCT/EP2002/014703
(87) Internationale Veröffentlichungsnummer: WO 2003/055732

(56) Entgegenhaltungen:
- EP-A- 0 447 626
- EP-A- 0 556 082
- DE-A- 19 841 913
- DE-A- 19 954 505
- US-A- 5 511 629

## Beschreibung

Die Erfindung betrifft ein Lenksystem insbesondere für Kraftfahrzeuge mit einer Lenkhandhabe die mit einem Lenkradaktuator in Verbindung steht.

Aus der Praxis sind Lenksysteme bekannt, bei denen eine Lenkbewegung von einem Lenkrad auf ein Lenkventil und anschließend zu einem Überlagerungsgetriebe übertragen wird. Das Überlagerungsgetriebe steht dabei über ein Ritzel in Verbindung mit einer Zahnstange. Das Lenkventil bildet einen Teil einer Hydraulikeinrichtung und steuert einen Druckmittelstrom zu einem Zylinder, wodurch die Zahnstangenbewegung hydraulisch unterstützt wird. Die Drehbewegung am Lenkrad wird somit vom Ritzel mit der hydraulischen Unterstützung in eine Axialbewegung der Zahnstange umgesetzt. Diese Axialbewegung der Zahnstange wird mittels Spurstangen auf die Radlenkhebel übertragen. Die Betätigung des Überlagerungsgetriebes und des Lenkventils erfolgt durch den mit dem Lenkrad verbundenen Lenkstrang. Eine Lenkvorrichtung für ein Fahrzeug bei dem zwischen einem Lenkrad und einem Lenkgetriebe ein Stellglied, zum überlagerten Lenkeingriff durch einen gesteuerten Elektromotor, angeordnet ist, ist aus der DE 198 27 869 A1 bekannt.

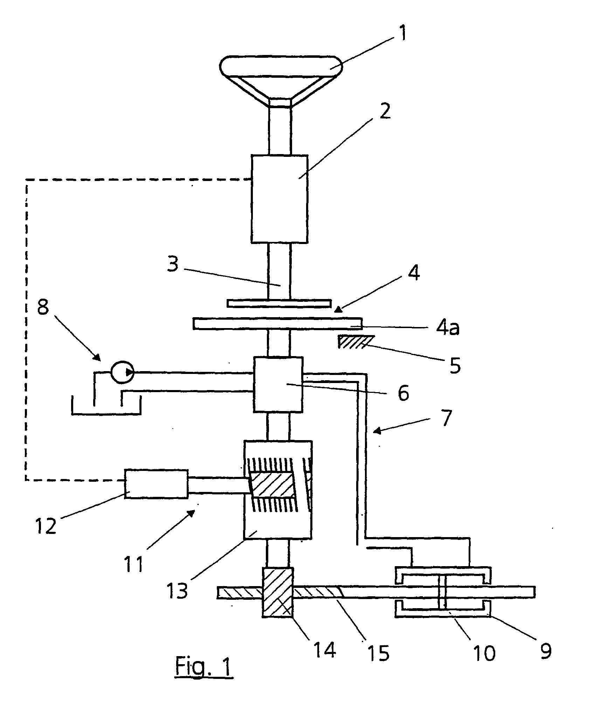

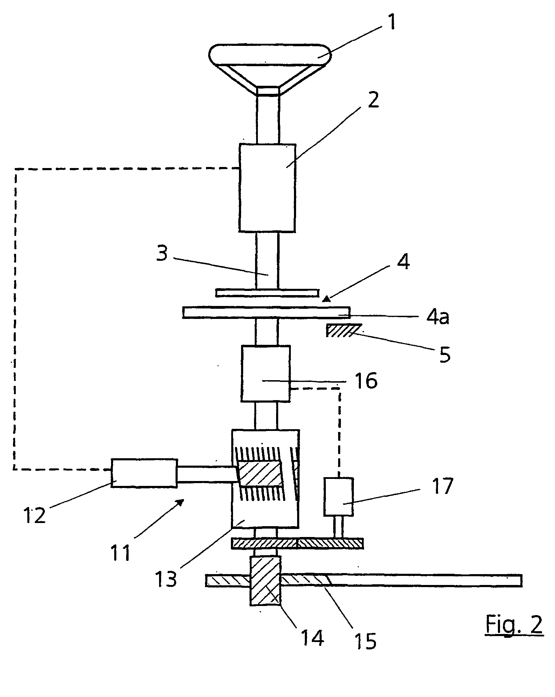

Bei dem aus der **DE 198 41 913 A1** bekannten Lenksystem wird bereits ein Lenksystem beschrieben, das eine Lenkhandhabe (siehe dort in Fig. 1 u. 2 "Lenkrad 6") aufweist, die mit einem Lenkradaktuator ("Lenkradwinkelsimulator 15" mit "Sensor 8") in Verbindung steht, wobei der Lenkradaktuator mit einem Überlagerungsgetriebe korrespondiert, das wenigstens einen Stellmotor zum Antreiben wenigstens einer mit einer Zahnstange verbundenen Getriebestufe aufweist. Zudem hat das Lenksystem auch eine Kupplung, mit der die Lenkhandhabe mechanisch angekoppelt oder getrennt werden kann. Jedoch wird dort in D1 die Zahnstange ausschließlich über das Überlagerungsgetriebe ("10" in der Fig. 2) oder über Elektromotoren ("2a und 2b" in der Fig. 1) bewegt. Eine weitere Unterstützung fehlt dort gänzlich.

Aus der DE 199 54 505 A1 ist ein Lenksystem bekannt, das ebenfalls eine mit der Zahnstange verbundene Getriebestufe (siehe dort in Fig. 1 "Lenkgetriebe 6") hat. Es gibt dort aber weder ein Uberlagerungsgetriebe noch irgendwelche unterstützende Hilfeinrichtungen.

In der EP 0 556 082 A1 (siehe dort insbesondere Fig. 1 u. 2 sowie Beschreibung, Spalte 3, Zeilen 34 ff.) ist ein Lenksystem beschrieben, das einen Hilfssteuermechanismus mit Elektromotor ("mécanisme de commande auxiliaire comporte un moteur électrique 15") hat, der über einen Getriebestrang ("train d'engrenages 16-17") auf die Zahnstange ("crémaillère 4") wirkt. Jedoch werden diese Mittel erst im Fall einer Anomalie, also im Störfall oder in einer Notsituation aktiviert, wobei die Kupplung (" l'embrayage 5") geöffnet und somit die Verbindung zur Lenksäule unterbrochen wird (siehe D3, Spalte 7, dritter Absatz ff.: "En cas d'anomalie..."). Das bedeutet, dass in einer Notsituation keine mechanische Kupplung zur Lenkhandhabe mehr besteht und der dortige Hilfssteuermechanismus allein die Lenkfunktion übernimmt. Demnach wird die dortige Hilfssteuerung wird als Ersatzlenkung eingeschaltet, damit sie Lenkfunktion allein übernimmt.

Weitere aus der Praxis bekannte Lenksysteme sind die sogenannten Fremdkraftlenkungen bzw. die Steer-By-Wire Lenkungen. Bei diesen Lenksystemen ist eine Kupplung vorgesehen die das Lenkrad vom Lenkgetriebe trennt. Dabei wird der vom Fahrer bzw. dem Lenkrad vorgegebene Lenkwunsch von einem Lenkradaktuator erfaßt und an eine Stelleinrichtung übertragen, die mittels einem Stellmotor und einem Getriebe ein Lenkventil einer Hydraulikeinrichtung entsprechend aussteuert. Im Ventilbereich ist dabei ein Ritzel gelagert, welches in die Verzahnung einer Zahnstange eingreift. Das Lenkventil bzw. die Hydraulikeinrichtung ist zwischen der Stelleinrichtung und der Zahnstange bzw. dem Ritzel angeordnet. Die Stelleinrichtung ist somit direkt an einem, dem Lenkgetriebe zugewandten Ende der Kupplung angeordnet. Dies ist notwendig, da, damit das Lenkventil ausgelenkt werden kann, von diesem eine Gegenkraft zu den Steuerimpulsen der Stelleinrichtung aufgebracht werden muß. Die Gegenkraft wird dabei von der Zahnstange bzw. dem Ritzel erzeugt, mit dem das Lenkventil bzw. die Hydraulikeinrichtung verbunden ist.

In nachteilhafter Weise treten beim Schließen der Kupplung, durch die Stelleinrichtung bzw. die Getriebestufe, Drehmomentschwankungen auf, die sowohl die Lenkhandhabe als auch das Lenkventil bezüglich der Ansteuerung negativ beeinflussen können. Die Drehmomentschwankungen, die auf das Lenkrad wirken, werden vom Fahrer als störend empfunden und beeinträchtigen das Fahrgefühl.

Beim bisher bekannten Steer-By-Wire System wird bei geschlossener Kupplung parallel zum Lenkventil der Ventilaktuator über eine Getriebestufe vom Lenkrad aus mit angetrieben. Dies beeinflußt die Ventilansteuerung negativ.

Mit den bisher bekannten Lenksystemen ist bei einem Steer-By-Wire Konzept eine zusätzliche, uneingeschränkte Nutzung des Überlagerungsgetriebes nicht möglich. Darüber hinaus ist auch eine uneingeschränkte Nutzung lediglich der hydraulischen Servolenkung nicht möglich.

Der vorliegenden Erfindung liegt daher die Aufgabe zugrunde, die genannten Nachteile des Standes der Technik zu lösen und ein vorteilhaftes, einfaches und kostengünstiges Lenksystem zu schaffen, das konstruktiv einfach herstellbar, sowie nachrüstbar ist und weitgehend mittels einem Baukastenprinzip realisiert werden kann.

Diese Aufgabe wird erfindungsgemäß durch die Merkmale von Anspruch 1 gelöst. Diese Aufgabe wird ebenfalls durch die Merkmale von Anspruch 11 gelöst.

Das erfindungsgemäße Lenksystem läßt sich in vorteilhafter Weise mit bereits bestehenden Lenksystemen kombinieren bzw. ermöglicht deren Aufrüstung mit weiteren Komponenten. Dadurch, daß die, die Lenkhandhabe von dem Lenkgetriebe trennende Kupplung bremsbar ist, kann die Stelleinrichtung gemäß den, von dem Lenkradaktuator vorgegebenen Impulsen, das Lenkventil entsprechend betätigen. Das notwendige Gegenmoment, damit die Stelleinrichtung das Lenkventil auslenken kann, wird dabei in einfacher und vorteilhafter Weise von der gebremsten Kupplung aufgebracht. Das Bremsen der Kupplung nach der Trennung bzw. während dem Trennvorgang der Lenkhandhabe von dem Lenkgetriebe verhindert auch das Auftreten von störenden Impulsen.

Das erfindungsgemäße Lenksystem kann in vorteilhafter Weise im Baukastenprinzip mit Serienbauteilen aufgebaut werden, da das Lenksystem in einer einfachen Ausführungsform konstruktiv nahezu identisch, ohne die für das Steer-By-Wire Konzept notwendigen Elemente, realisiert werden kann. Die modulare Bauweise ermöglicht somit den Einsatz von Gleichteilen für die Lenksysteme mit einem Überlagerungsgetriebe und die Steer-By-Wire Lenksysteme.

Gegenüber dem bisher bekannten Steer-By-Wire Konzept sind unterschiedliche Varianten uneingeschränkt nutzbar, d.h. der für die jeweilige Fahrsituation optimale Fahrmodus kann aktiviert werden. Gegenüber dem bisher bekannten Steer-By-Wire Konzept ist zusätzlich ein Lenken mit dem Überlagerungsgetriebe uneingeschränkt möglich. Das Lenksystem kann hierzu derart geschaltet werden, daß die Kupplung geschlossen wird, der Lenkradaktuator passiv und das Überlagerungsgetriebe aktiv ist. Im Unterschied zu dem aus dem Stand der Technik bekannten Steer-By-Wire Konzept ist zusätzlich der Modus "hydraulische Servolenkung" uneingeschränkt nutzbar. Hierzu wird das Lenksystem derart geschaltet, daß bei geschlossener Kupplung der Lenkradaktuator und das Überlagerungsgetriebe passiv sind.

In vorteilhafter Weise lassen sich durch die unterschiedlichen Varianten, bei einem Ausfall von einzelnen Bauteilen, zuverlässige Notlenksysteme realisieren.

Von Vorteil ist es, wenn die Lenkhandhabe bei geschlossener Kupplung über einen Lenkstrang direkt mit dem Lenkventil verbunden ist.

Im Unterschied zu Lenksystemen, die aus dem Stand der Technik bekannt sind, ermöglicht die direkte Verbindung der Lenkhandhabe mit dem Lenkventil eine störungsfreie Schaltung des Lenkventiles und verhindert, daß vom Lenkgetriebe störende Impulse oder Drehmomentschwankungen an die Lenkhandhabe bzw. den Fahrer übermittelt werden. In vorteilhafter Weise ist durch das erfindungsgemäße Lenksystem eine Ventilansteuerung unmittelbar von der Lenkhandhabe aus möglich, ohne ein zwischengeschaltetes Überlagerungsgetriebe.

Erfindungsgemäß kann ferner vorgesehen sein, daß die Kupplung im ausgeschaltetem Zustand eines Fahrzeugmotors geschlossen ist.

In vorteilhafter Weise wird durch das Schließen der Kupplung ein Durchdrehen der Lenkhandhabe verhindert. Bei einer geöffneten Kupplung wäre die Lenkhandhabe, wenn die Elektromotoren nicht betätigt werden, d.h. bei ausgeschaltetem Fahrzeugmotor, widerstandslos drehbar.

Von Vorteil ist es, wenn die Kupplung in einer Notlenkfunktion geschlossen ist.

Bei einem Ausfall des Überlagerungsgetriebes oder bei einem Ausfall der Hydraulik ist durch das Schließen der Kupplung ein Weiterbetrieb des Lenksystems, wie bei einer klassischen Zahnstangenhydrolenkung, möglich.

Eine Ausbildung des Stellmotors derart, daß dieser eine Notlenkfunktion realisieren kann, erhöht die Sicherheit bzw. die Redundanz des gesamten Systems. Hierbei dürfte es ausreichend sein, wenn der Stellmotor für ein kontrolliertes Anhalten des Fahrzeugs ausgelegt ist. Ein Auslenken der Fahrzeugräder im Stand, muß, damit der Stellmotor kostengünstig herstellbar ist, nicht gegeben sein.

Vorteilhafte Weiterbildungen und Ausgestaltungen der Erfindung ergeben sich aus den weiteren Unteransprüchen und aus dem nachfolgend anhand der Zeichnung prinzipmäßig dargestellten Ausführungsbeispiel.

Es zeigt:
- Fig. 1: eine schematische Darstellung des erfindungsgemäßen Lenksystems mit hydraulischer Unterstützung, und
- Fig. 2: eine schematische Darstellung des erfindungsgemäßen Lenksystems mit elektrischer Unterstützung.

Lenksysteme für Kraftfahrzeuge und hierfür notwendige Komponenten sind prinzipiell bereits hinlänglich bekannt bzw. ergeben sich aus dem bekannten Steer-By-Wire Konzept und den bekannten Überlagerungsgetrieben, weshalb nachfolgend lediglich auf die für die Erfindung relevanten Merkmale näher eingegangen wird.

Das erfindungsgemäße Lenksystem gemäß Fig. 1 und Fig. 2 weist eine Lenkhandhabe 1 zur Betätigung eines Lenkradaktuators 2 auf. Der Lenkradaktuator 2 kann dabei eine bekannte Einrichtung zur Erfassung des vorgegebenen Lenkwinkels aufweisen. Darüber hinaus kann der Lenkradaktuator 2 in nicht dargestellter Weise mit einem Elektromotor versehen sein, der ein Lenkmoment erzeugt und dieses an die Lenkhandhabe 1 und somit an den Fahrer übermittelt. Der Fahrer soll dadurch ein Fahrgefühl erhalten, wie er es von herkömmlichen Lenksystemen gewöhnt ist.

Der Lenkradaktuator 2 ist auf bzw. in einem Lenkstrang 3 unmittelbar hinter der als Lenkrad 1 ausgebildeten Lenkhandhabe angeordnet. An der von dem Lenkrad 1 abgewandten Seite des Lenkradaktuators 2 ist an dem Lenkstrang 3 eine Kupplung 4 eingesetzt. Die Kupplung 4 ist dabei als Kupplungs-Brems-Kombination zum Trennen des Lenkstranges 3 ausgebildet. In dem dargestellten Ausführungsbeispiel wird die Kupplungsseite 4 gegen ein nicht näher dargestelltes Gehäuse 5 gebremst.

Die Lenkhandhabe 1 ist bei geschlossener Kupplung 4 direkt mit einem Lenkventil 6 einer Hydraulikeinrichtung 7 (Fig. 1) bzw. einem Lenkmomentsensor 16 (Fig. 2) verbunden.

Die Hydraulikeinrichtung 7 weist in bekannter Weise eine Pumpe 8 sowie einen Zylinder 9 mit einem Kolben 10 auf. Die Arbeitsräume des Zylinders 9 werden dabei in bekannter Weise durch die Pumpe 8 mit einem Hydraulikmittel versorgt. Der Aufbau der Hydraulikeinrichtung 7 ist prinzipiell von bekannter Bauweise und Funktion, so daß hierauf nachfolgend nicht näher eingegangen wird.

Wie aus den Figuren 1 und 2 ersichtlich ist, weist das erfindungsgemäße Lenksystem in beiden Ausgestaltungen ein Überlagerungsgetriebe 11 auf. Das Überlagerungsgetriebe 11 weist dabei wenigstens einen Stellmotor 12 und eine Getriebestufe 13 auf. Von der Getriebestufe 13 greift ein Ritzel 14 in eine Zahnstange 15, auf der in bekannter Weise der Kolben 10 befestigt ist.

Der Stellmotor 12 korrespondiert mittels einer nicht näher dargestellten Steuereinrichtung mit dem Lenkradaktuator 2. Gemäß der vom Lenkradaktuator 2 vorgegebenen Werte betätigt der Stellmotor 12 die Getriebestufe 13 und somit das Lenkventil 6 (Fig. 1) bzw. einen Lenkmomentsensor 16 (Fig. 2). Die Axialbewegung der Zahnstange 15, die letztendlich zur Auslenkung der nicht dargestellten Fahrzeugräder führt, wird einerseits durch das Ritzel 14 und andererseits durch die Hydraulikeinrichtung 7 (Fig. 1) bzw. einer mit dem Lenkmomentsensor 16 in Verbindung stehenden Lenkhilfemotor 17 (Fig. 2) aufgebracht. Eine Betätigung des Lenkventils 6 der Hydraulikeinrichtung 7 bzw. des Lenkmomentsensors 16 durch das Überlagerungsgetriebe 11 ist in einfacher Weise möglich, da das Gegenmoment, das zum Auslenken notwendig ist, durch die am Gehäuse 5 gebremste Kupplungsseite 4 aufgebracht wird.

Der Lenkhilfemotor 17 ist in unbekannter Weise, wie aus Fig. 2 ersichtlich, mit einem Zahnrad versehen, das zwischen der Getriebestufe 13 und dem Ritzel 14 angreift. Durch das Überlagerungsgetriebe 11 kann in vorteilhafter Weise die Übersetzung erhöht oder erniedrigt werden. Damit ist es möglich, daß bei einer langsamen Fahrt des Fahrzeugs oder im Stand, beispielsweise mit einer halben oder ganzen Lenkradumdrehung, der Gesamthub abgefahren wird. Bei höheren Geschwindigkeiten kann die Übersetzung entsprechend reduziert werden, so daß ein komfortables Lenken möglich ist, ohne daß bereits bei geringsten Lenkbewegungen unsichere Fahrzeugzustände auftreten. Das Prinzip derartiger Überlagerungslenkungen, bei denen die Drehbewegung ummodeliert wird, ist prinzipiell bereits bekannt, weshalb auf die konstruktive Ausführung diesbezüglich nicht näher eingegangen wird.

Im Unterschied zu den bekannten Steer-By-Wire Konzepten sind zusätzlich verschiedene Einstellungen bzw. Varianten nutzbar. Dabei kann, in Abhängigkeit der jeweiligen Fahrsituation, beispielsweise vorgesehen sein, daß die Kupplung 4 geschlossen und der Lenkradaktuator 2 passiv ist. Das Überlagerungsgetriebe 11 kann dabei aktiv sein, so daß die daraus resultierenden Vorteile voll genutzt werden können. In alternativen Ausgestaltungen kann das Lenksystem dabei auch so modular aufgebaut werden, daß das Basismodell kein Steer-By-Wire Konzept vorsieht und dies als Ausstattungsvariante ergänzt werden kann, ohne daß die bereits vorhandenen Bauteile verändert werden müssen. Hierzu ist lediglich eine Auftrennung des Lenkstranges 3 und die Anordnung einer bremsbaren Kupplung 4, erforderlich.

In einem alternativen Fahrmodus kann auch vorgesehen sein, daß bei geschlossener Kupplung 4 der Lenkradaktuator 2 sowie das Überlagerungsgetriebe 11 passiv sind. In diesem Modus kann das erfindungsgemäße Lenksystem uneingeschränkt als "hydraulische Servolenkung" bzw. "elektrische Servolenkung" genutzt werden.

Zum Fahren im Steer-By-Wire Modus kann, in vorteilhafter Weise, beim Starten einer Zündung des Fahrzeugs der Lenkstrang 3 durch die Kupplung 4 getrennt werden, wobei die von dem Lenkrad 1 abgewandte Kupplungsseite 4a gegen das Gehäuse 5 gebremst wird. Der, gegenüber herkömmlichen Überlagerungsgetrieben 11 leistungsstärkere Stellmotor 12, übernimmt den Lenkvorgang. Der Stellmotor wird dabei von dem Lenkradaktuator 2 über ein nicht dargestelltes Steuergerät angesteuert bzw. geregelt. Das von dem Lenkradaktuator 2 für den Fahrer erzeugte Lenkmoment kann frei programmierbar sein.

Wenn die Kupplungshälfte 4a gebremst ist, kann der Stellmotor 12 eine Notlenkfunktion übernehmen.

In nicht dargestellter Weise kann vorgesehen sein, daß die Kupplung 4 am Endänschlag des Lenkrades 1 bzw. der Lenkung schließt, so daß Beschädigungen bzw. Überlastungen der Bauteile vermieden werden. Ein mißbräuchliches Einleiten von zu hohen Momenten, die ansonsten aufwendig abgefangen werden müßten, wird somit in einfacher Weise vermieden.

Das erfindungsgemäße Lenksystem läßt sich, wie in den Figuren 1 und 2 dargestellt, sowohl für Hilfskraftlenkanlagen mit hydraulischer oder elektrischer Unterstützung einsetzen. Vorteilhafte Ausgestaltungen und Merkmale sind für beide Systeme einsetzbar.

### Bezugszeichen

- 1: Lenkhandhabe
- 2: Lenkradaktuator
- 3: Lenkstrang
- 4: Kupplung
- 4a: Kupplungsseite
- 5: Gehäuse
- 6: Lenkventil
- 7: Hydraulikeinrichtung
- 8: Pumpe
- 9: Zylinder
- 10: Kolben
- 11: Überlagerungsgetriebe
- 12: Stellmotor
- 13: Getriebestufe
- 14: Ritzel
- 15: Zahnstange
- 16: Lenkmomentsensor
- 17: Lenkhilfemotor

## Patentansprüche

1. Lenksystem, insbesondere für Kraftfahrzeuge, mit einer Lenkhandhabe (1), die mit einem Lenkradaktuator (2) in Verbindung steht, wobei der Lenkradaktuator (2) mit einem Überlagerungsgetriebe (11) korrespondiert, das wenigstens einen Stellmotor (12) zum Antreiben wenigstens einer mit einer Zahnstange (15) verbundenen Getriebestufe (13) aufweist,
**dadurch gekennzeichnet, daß**
zur hydraulischen Unterstützung der Zahnstangenbewegung eine Hydraulikeinrichtung (7) vorgesehen ist, die ein Lenkventil (6) auf weist, das von dem Überlagerungsgetriebe (11) betätigbar ist, wobei auch die Lenkhandhabe (1) durch das Schließen einer bremsbaren Kupplung (4) mit dem Lenkventil (6) verbindbar ist.

2. Lenksystem nach Anspruch 1,
**dadurch gekennzeichnet, daß**
die Lenkhandhabe (1) bei geschlossener Kupplung (4) über einen Lenkstrang (3) direkt mit dem Lenkventil (6) verbunden ist.

3. Lenksystem nach Anspruch 1 oder 2,
**dadurch gekennzeichnet, daß**
die Kupplung (4) gegen ein Gehäuse (5) bremsbar ist.

4. Lenksystem nach Anspruch 2 oder 3,
**dadurch gekennzeichnet, daß**
die Kupplung (4) als Kupplungs-Brems-Kombination zum Trennen des Lenkstranges (3) ausgebildet ist.

5. Lenksystem nach Anspruch 2, 3 oder 4,
**dadurch gekennzeichnet, daß**
der Lenkradaktuator (2) unmittelbar an der Lenkhandhabe (1) am bzw. im Lenkstrang (3) angeordnet ist.

6. Lenksystem nach einem der Ansprüche 1 bis 5,
**dadurch gekennzeichnet , daß**
der Lenkradaktuator (2) einen Elektromotor zur Erzeugung eines Lenkmomentes an der Lenkhandhabe (1) aufweist.

7. Lenksystem nach einem der Ansprüche 1 bis 6,
**dadurch gekennzeichnet, daß**
die Kupplung (4) im ausgeschaltetem Zustand eines Fahrzeugmotors geschlossen ist.

8. Lenksystem nach einem der Ansprüche 1 bis 7,
**dadurch gekennzeichnet, daß**
die Kupplung (4) in einer Notlauffunktion geschlossen ist.

9. Lenksystem nach einem der Ansprüche 1 bis 8,
**dadurch gekennzeichnet, daß**
der Lenkradaktuator (2) bei geschlossener Kupplung (4) passiv und der Stellmotor (12) aktiv ist.

10. Lenksystem nach einem der Ansprüche 1 bis 8,
**dadurch gekennzeichnet, daß**
der Lenkradaktuator (2) und der Stellmotor (12) bei geschlossener Kupplung (4). passiv sind.

11. Lenksystem, insbesondere für Kraftfahrzeuge, mit einer Lenkhandhabe, die mit einem Lenkradaktuator (2) in Verbindung steht, wobei der Lenkradaktuator (2) mit einem Überlagerungsgetriebe (11) korrespondiert, das wenigstens einen Stellmotor (12) zum Antreiben wenigstens einer mit einer Zahnstange (15) verbundenen Getriebestufe (13) aufweist, wobei die Lenkhandhabe (1) durch das Schließen einer bremsbaren Kupplung (4) mit dem Überlagerungsgetriebe verbindbar ist,
**dadurch gekennzeichnet, daß**
zur elektrischen Unterstützung der Zahnstangenbewegung ein Lenkhilfemotor (17) vorgesehen ist, der mit einem Sensor (16) in Verbindung steht, welcher von dem Überlagerungsgetriebe (11) betätigbar ist.

## Claims

1. Steering system, in particular for motor vehicles, having a steering handle (1) which is connected to a steering-wheel actuator (2), the steering-wheel actuator (2) corresponding with a variable-ratio gear mechanism (11) which has at least one actuating motor (12) for driving at least one gear-mechanism stage (13) which is connected to a rack (15), **characterized in that**, in order to assist the rack movement hydraulically, a hydraulic device (7) is provided which has a steering valve (6) which can be actuated by the variable-ratio gear mechanism (11), it also being possible to connect the steering handle (1) to the steering valve (6) by closing a clutch (4) which can be braked.

2. Steering system according to Claim 1, **characterized in that** the steering handle (1) is connected directly to the steering valve (6) via a steering line (3) when the clutch (4) is closed.

3. Steering system according to Claim 1 or 2, **characterized in that** the clutch (4) can be braked against a casing (5).

4. Steering system according to Claim 2 or 3, **characterized in that** the clutch (4) is configured as a clutch/brake combination for separating the steering line (3).

5. Steering system according to Claim 2, 3 or 4, **characterized in that** the steering-wheel actuator (2) is arranged directly on the steering handle (1) on or in the steering line (3).

6. Steering system according to one of Claims 1 to 5, **characterized in that** the steering-wheel actuator (2) has an electric motor for generating a steering moment at the steering handle (1).

7. Steering system according to one of Claims 1 to 6, **characterized in that** the clutch (4) is closed in the switched-off state of a vehicle engine.

8. Steering system according to one of Claims 1 to 7, **characterized in that** the clutch (4) is closed in an emergency running function.

9. Steering system according to one of Claims 1 to 8, **characterized in that**, when the clutch (4) is closed, the steering-wheel actuator (2) is passive and the actuating motor (12) is active.

10. Steering system according to one of Claims 1 to 8, **characterized in that** the steering-wheel actuator (2) and the actuating motor (12) are passive when the clutch (4) is closed.

11. Steering system, in particular for motor vehicles, having a steering handle which is connected to a steering-wheel actuator (2), the steering-wheel actuator (2) corresponding with a variable-ratio gear mechanism (11) which has at least one actuating motor (12) for driving at least one gear-mechanism stage (13) which is connected to a rack (15), it being possible to connect the steering handle (1) to the variable-ratio gear mechanism by closing a clutch (4) which can be braked, **characterized in that**, in order to assist the rack movement electrically, a power steering motor (17) is provided which is connected to a sensor (16) which can be actuated by the variable-ratio gear mechanism (11).

## Revendications

1. Système de direction, notamment pour automobiles, avec un volant de direction (1) qui est relié à un actionneur (2) de volant de direction, l'actionneur (2) de volant de direction correspondant avec une boîte mixte (11) qui présente au moins un servomoteur (12) pour entraîner au moins un étage de boîte (13) relié à une crémaillère (15), **caractérisé en ce qu'**un dispositif hydraulique (7) est prévu pour l'assistance hydraulique du mouvement de la crémaillère, dispositif qui présente une soupape de direction (6) qui peut être actionnée par la boîte mixte (11), sachant que le volant de direction (1) peut également être relié à la soupape de direction (6) par la fermeture d'un accouplement freinable (4).

2. Système de direction selon la revendication 1, **caractérisé en ce que** le volant de direction (1), lorsque l'accouplement (4) est fermé, est directement relié à la soupape de direction (6) via un arbre de direction (3).

3. Système de direction selon la revendication 1 ou 2, **caractérisé en ce que** l'accouplement (4) peut être freiné contre un boîtier (5).

4. Système de direction selon la revendication 2 ou 3, **caractérisé en ce que** l'accouplement (4) est réalisé sous forme de combinaison accouplement-frein pour le sectionnement de l'arbre de direction (3).

5. Système de direction selon la revendication 2, 3 ou 4, **caractérisé en ce que** l'actionneur (2) de volant de direction est disposé sur ou dans l'arbre de direction (3) directement contre le volant de direction (1).

6. Système de direction selon l'une quelconque des revendications 1 à 5, **caractérisé en ce que** l'actionneur (2) de volant de direction présente un moteur électrique pour produire un couple de direction sur le volant de direction (1).

7. Système de direction selon l'une quelconque des revendications 1 à 6, **caractérisé en ce que** l'accouplement (4) est fermé dans l'état arrêté d'un moteur de véhicule.

8. Système de direction selon l'une quelconque des revendications 1 à 7, **caractérisé en ce que** l'accouplement (4) est fermé dans une fonction de fonctionnement de secours.

9. Système de direction selon l'une quelconque des revendications 1 à 8, **caractérisé en ce que** l'actionneur (2) de volant de direction est passif et le servomoteur (12) actif lorsque l'accouplement (4) est fermé.

10. Système de direction selon l'une quelconque des revendications 1 à 8, **caractérisé en ce que** l'actionneur (2) de volant de direction et le servomoteur (12) sont passifs lorsque l'accouplement (4) est fermé.

11. Système de direction, notamment pour automobiles, avec un volant de direction qui est relié à un actionneur (2) de volant de direction, l'actionneur (2) de volant de direction correspondant avec une boîte mixte (11) qui présente au moins un servomoteur (12) pour entraîner au moins un étage de boîte (13) relié à une crémaillère (15), sachant que le volant de direction (1) peut être relié à la boîte mixte par la fermeture d'un accouplement freinable (4), **caractérisé en ce qu'**un moteur auxiliaire de direction (17) est prévu pour l'assistance électrique du mouvement de la crémaillère, moteur qui est relié à un capteur (16) qui peut être actionné par la boîte mixte (11).
